# EUROPEAN PATENT SPECIFICATION

(11) **EP 3 929 611 B1**
(45) Date of publication and mention of the grant of the patent: **26.08.2026**
(21) Application number: 21180610.4
(22) Date of filing: 21.06.2021
(51) Int. Cl.: G01S 5/02, G01S 19/14, G01S 19/39, G01S 19/48

(54) **METHOD AND APPARATUS FOR GUIDING PROBE DATA COLLECTION**
VERFAHREN UND VORRICHTUNG ZUR FÜHRUNG DER PROBENDATENSAMMLUNG
PROCÉDÉ ET APPAREIL DE GUIDAGE DE COLLECTE DE DONNÉES DE SONDE

(30) Priority: 22.06.2020 US 202063042278 P; 09.12.2020 US 202017116568
(43) Date of publication of application: 29.12.2021
(73) Proprietor: HERE Global B.V., 5611 ZT Eindhoven (NL)
(72) Inventor: Ivanov, Pavel, 33100 Tampere (FI); Nurminen, Henri Jaakko Julius, 33100 Tampere (FI); Wirola, Lauri Aarne Johannes, 33100 Tampere (FI)
(74) Representative: Cohausz & Florack

(56) References cited:
- US-A1- 2011 090 081
- US-A1- 2014 335 893
- US-A1- 2015 264 519
- HANSEN R ET AL: "Seamless Indoor/Outdoor Positioning Handover for Location-Based Services in Streamspin", MOBILE DATA MANAGEMENT: SYSTEMS, SERVICES AND MIDDLEWARE, 2009. MDM '09. TENTH INTERNATIONAL CONFERENCE ON, IEEE, PISCATAWAY, NJ, USA, 18 May 2009 (2009-05-18), pages 267 - 272, XP031476829, ISBN: 978-1-4244-4153-2

## Description

### TECHNOLOGICAL FIELD

A method, apparatus and computer program product are provided in accordance with an example embodiment in order to collect probe data and, more particularly, to guide the collection of probe data.

### BACKGROUND

Traditional positioning technologies utilizing either satellite-based radio navigation signals or cellular signals provide reliable positioning performance in many outdoor areas. For example, in those outdoor areas having a relatively clear line of sight to the satellites or having reasonably good reception of the cellular signals, the location of a user device, such as a mobile telephone, can generally be determined with sufficient accuracy. However, these same positioning technologies do not typically provide satisfactory performance indoors with the location of a user device being determined with reduced accuracy and increased uncertainty. In this regard, satellite-based radio navigation systems generally do not sufficiently penetrate through the walls and roofs of various structures to allow for adequate signaling reception indoors, and cellular signals typically have a bandwidth that is too narrow to allow for accurate ranging indoors. As such, satellite and cellular-based positioning technologies typically do not provide the desired positioning accuracy, such as two to three meters, and do not provide sufficient coverage, such as coverage approaching 100%, indoors. Additionally, satellite and cellular-based positioning technology generally do not reliably detect the floor on which a user device is located within a multi-story building as desired in indoor positioning applications. As a result, positioning technologies utilizing either satellite-based radio navigation signals or cellular signals cannot generally determine the position of a user device, such as for navigational or other purposes, both outdoors and indoors in a seamless and reliable manner.

Various indoor positioning technologies have therefore been developed and deployed. Some of these indoor positioning technologies are based on short range beacons termed pseudolites. Others utilize ultrasound positioning or Wi-Fi fingerprinting techniques. Still others employ positioning beacons that emit Bluetooth Low Energy (BTLE) signals from which a location may be determined based upon the angles of arrival of the BTLE signals at a user device. However, these indoor positioning techniques generally require either the deployment of additional infrastructure, such as beacons, tags, etc., or an exhaustive radio survey of the indoor locations for which location services are to be provided, thereby hindering deployment of these indoor positioning technologies, at least on a wide scale.

A radio-based indoor positioning technology has been developed that models the existing radio environment, such as the Wi-Fi radio environment and/or the Bluetooth radio environment, from observed received signal strength (RSS) measurements as two-dimensional radio maps. As a result, the dynamics of the indoor radio propagation environment are captured by the two-dimensional radio maps in a compressible and accurate manner. By creating radio maps for each floor of a multi-story building, a radio-based indoor positioning technique also provides for reliable floor detection.

By relying upon the existing radio environment, this radio-based indoor positioning technique does not require the deployment of additional infrastructure, such as beacons, tags, etc. However, measurements of the radio environment within the buildings in which the positioning technique is to be deployed is necessary in order to create and update the radio maps. The measurements may be in the form of probe data that includes information regarding the RSS along with the location of the user device at the time at which the RSS was measured and the time at which the RSS was measured. Large volumes of probe data may be collected by crowdsourcing or with volunteers surveying the indoor areas, such as in exchange for a reward or recognition in some instances.

However, the identification of the location of the user device when an RSS measurement is obtained may be more challenging in an indoor environment due to, for example, the limitations associated with positioning technologies utilizing either satellite-based radio navigation signals or cellular signals which may result in increased uncertainty or decreased accuracy in the locations that are determined. In an effort to determine an indoor location at which RSS measurements are obtained by a user device, a location may be determined based upon a combination of location information determined by a Global Navigation Satellite System (GNSS) location sensor as well as information provided by one or more motion sensors onboard the user device. While this approach to determining location in conjunction with the collection of probe data is scalable, the accuracy of the location is not always sufficient. For example, some probe data may be associated with a location that has been determined by a combination of information from a GNSS location sensor and information from one or more motion sensors with sufficient accuracy, such as accuracy to within two to three meters, but a significant portion of the probe data is associated with a location that is significantly less accurate, such as an accuracy of about 10 to 30 meters, which is insufficient for most applications of indoor positioning technology.

As such, a user who is collecting probe data and utilizing information provided by a GNSS location sensor to determine the location may alternately collect probe data outdoors and indoors in an effort to maintain reasonable accuracy in relation to the locations determined indoors. In this regard, the user may first collect probe data outdoors in order to establish a location with relatively high accuracy. The user may then enter a building or other indoor environment and collect probe data for a limited period of time. While indoors, the location of the probe data collected while indoors is again provided by the GNSS location sensor such that the accuracy of the location degrades over time as the user remains indoors. The user then returns outdoors in order to again collect probe data with a location established with relatively high accuracy by the GNSS location sensor, prior to repeating this process. However, the probe data collected indoors by this technique is at least sometimes unevenly distributed with more probe data collected near the entrances to the indoor environment than indoor regions further removed from the entrances.

Alternatively, the location data associated with RSS measurements may be manually provided during the probe data collection process. While the location data that is manually provided may sometimes be sufficiently accurate, such as with an accuracy of one meter or less, the manual entry of location data is laborious, not scalable and prone to errors, thereby generally limiting this approach to the collection of probe data by trusted users and those with at least basic mapping and orienting skills, as opposed to a more broad implementation via crowdsourcing.

From US 2015/0264519 methods and apparatuses are known for generating and updating heat maps for terrestrial wireless transceivers located in an area or venue. According to some embodiments, a method may include obtaining, by a mobile device, first signal data for a terrestrial transceiver and generating, by the mobile device, a transceiver heat map using the first signal data. The method may further include displaying, by the mobile device, a request to gather additional signal data for the terrestrial transceiver and obtaining, by the mobile device, second signal data for the terrestrial transceiver. The method may further include generating, by the mobile device, an updated transceiver heat map using the second signal data and displaying, by the mobile device, the updated transceiver heat map.

Further "Seamless Indoor/Outdoor Positioning Handover for Location-Based Services in Streamspin" by René Hansen et al. presents the implementation of a novel seamless indoor/outdoor positioning service for mobile users. The service is being made available in the Streamspin system (www.streamspin.com), an open platform for the creation and delivery of location-based services. Streamspin seeks to enable the delivery of truly ubiquitous location-based services by integrating GPS and Wi-Fi location fingerprinting. The paper puts focus on key aspects of the seamless handover between outdoor to indoor positioning. Several different handover solutions are presented, and their applicability is evaluated with respect to positioning accuracy and battery consumption of the mobile device.

### BRIEF SUMMARY

The invention is defined by the appended claims.

A method, apparatus and computer program product are therefore provided in accordance with an example embodiment in order to guide the collection of probe data, such as within an indoor or other setting in which the probe data that is otherwise collected will have a location associated therewith with an undesirably high level of uncertainty and/or an undesirably low level of accuracy. By guiding the collection of probe data, the method, apparatus and computer program product of an example embodiment ensure that the probe data that is collected is associated with locations that are determined with sufficient accuracy, thereby increasing the confidence both in the radio maps created based upon the probe data and in the eventual use of those radio maps in conjunction with various applications, such as mapping, navigation, etc. The method, apparatus and computer program product of an example embodiment also facilitate the collection of probe data with improved coverage by encouraging the collection of a sufficient quantity of probe data throughout the indoor or other location.

In an embodiment, a method is provided for collecting probe data. While collecting the probe data, the method includes determining a location of a user device and a corresponding uncertainty or accuracy associated with the determined location. Based upon a relationship of the uncertainty or accuracy associated with the determined location and a predefined threshold, the method causes the user device to provide first user guidance towards a first region having less uncertainty, or more accuracy, than the uncertainty, or accuracy, associated with the determined location. For example, in an instance in which the uncertainty, or accuracy, associated with the determined location fails to satisfy a predefined threshold, the method causes the user device to provide first user guidance towards a first region having less uncertainty, or more accuracy, than the uncertainty, or accuracy, associated with the determined location. Conversely, in an instance in which the uncertainty, or accuracy, associated with the determined location satisfies the predefined threshold, the method causes the user device to provide second user guidance towards a second region in which probe data is to be collected.

The uncertainty associated with a determined location within the second region is greater than the uncertainty associated with a determined location within the first region. Stated differently, the accuracy associated with a determined location within the second region is less than the accuracy associated with a determined location within the first region. For example, the first and second regions may be outdoor and indoor regions, respectively. The method of an example embodiment also includes determining the second region for which the second user guidance is provided based upon the quantity of the probe data that has been collected in the second region. In this embodiment, the method may determine the second region by determining the second region for which the second user guidance is provided from among one or more regions having greater uncertainty, or less accuracy, than the first region. In an example embodiment, the method also includes determining the second region for which the second user guidance is provided based upon a duration during which probe data is anticipated to be collected with an uncertainty, or accuracy, that satisfies the predefined threshold.

The method also includes determining the first region for which the first user guidance is provided based upon a respective weight assigned to each of a plurality of regions having less uncertainty, or more accuracy, than the uncertainty, or accuracy, associated with the determined location. The respective weight assigned to a respective region of the plurality of regions having less uncertainty, or more accuracy, than the uncertainty, or accuracy, associated with the determined location may be based upon a distance between the location of the user device that most recently had a corresponding uncertainty, or accuracy, that satisfied the predefined threshold and a location of the respective region. Alternatively, the respective weight assigned to a respective region of the plurality of regions having less uncertainty, or more accuracy, than the uncertainty, or accuracy, associated with the determined location is based upon a quantity of probe data that has been collected proximate the respective region.

The method of an example embodiment also includes modifying the predefined threshold based upon a measure of the probe data that has been collected. Additionally or alternatively, the method of an example embodiment includes modifying the predefined threshold based upon a size of a building within which at least some of the probe data is collected.

In another embodiment, an apparatus is provided that is configured to collect probe data. The apparatus includes processing circuitry and at least one memory storing computer program code with the at least one memory and the computer program code configured to, with the processing circuitry, cause the apparatus, while collecting the probe data, to determine a location of a user device and a corresponding uncertainty or accuracy associated with the determined location. Based upon a relationship of the uncertainty or accuracy associated with the determined location and a predefined threshold, the at least one memory and the computer program code are also configured to, with the processing circuitry, cause the apparatus, to cause the user device to provide first user guidance towards a first region having less uncertainty, or more accuracy, than the uncertainty, or accuracy, associated with the determined location. For example, in an instance in which the uncertainty, or accuracy, associated with the determined location fails to satisfy a predefined threshold, the at least one memory and the computer program code are configured to, with the processing circuitry, cause the apparatus, to cause the user device to provide first user guidance towards a first region having less uncertainty, or more accuracy, than the uncertainty, or accuracy, associated with the determined location. Conversely, in an instance in which the uncertainty, or accuracy, associated with the determined location satisfies the predefined threshold, the at least one memory and the computer program code are configured to, with the processing circuitry, cause the apparatus, to cause the user device to provide second user guidance towards a second region in which probe data is to be collected.

The uncertainty associated with a determined location within the second region is greater than the uncertainty associated with a determined location within the first region. Stated differently, the accuracy associated with a determined location within the second region is less than the accuracy associated with a determined location within the first region. For example, the first and second regions may be outdoor and indoor regions, respectively. The at least one memory and the computer program code are further configured to, with the processing circuitry, cause the apparatus of an example embodiment to determine the second region for which the second user guidance is provided based upon the quantity of the probe data that has been collected in the second region. In this embodiment, the at least one memory and the computer program code may be configured to, with the processing circuitry, cause the apparatus to determine the second region by determining the second region for which the second user guidance is provided from among one or more regions having greater uncertainty, or less accuracy, than the first region. In an example embodiment, the at least one memory and the computer program code are also configured to, with the processing circuitry, cause the apparatus to determine the second region for which the second user guidance is provided based upon a duration during which probe data is anticipated to be collected with an uncertainty, or accuracy, that satisfies the predefined threshold.

The at least one memory and the computer program code are further configured to, with the processing circuitry, cause the apparatus to determine the first region for which the first user guidance is provided based upon a respective weight assigned to each of a plurality of regions having less uncertainty, or more accuracy, than the uncertainty, or accuracy, associated with the determined location. The respective weight assigned to a respective region of the plurality of regions having less uncertainty, or more accuracy, than the uncertainty, or accuracy, associated with the determined location may be based upon a distance between the location of the user device that most recently had a corresponding uncertainty, or accuracy, that satisfied the predefined threshold and a location of the respective region. Alternatively, the respective weight assigned to a respective region of the plurality of regions having less uncertainty, or more accuracy, than the uncertainty, or accuracy, associated with the determined location is based upon a quantity of probe data that has been collected proximate the respective region.

The at least one memory and the computer program code are further configured to, with the processing circuitry, cause the apparatus of an example embodiment to modify the predefined threshold based upon a measure of the probe data that has been collected. Additionally or alternatively, the at least one memory and the computer program code are configured to, with the processing circuitry, cause the apparatus of an example embodiment to modify the predefined threshold based upon a size of a building within which at least some of the probe data is collected.

In a further embodiment, a computer program product is provided that is configured to collect probe data. The computer program product includes at least one non-transitory computer-readable storage medium having computer-executable program code instructions stored therein with the computer-executable program code instructions including program code instructions configured to, when executed by an apparatus, cause the apparatus, while collecting the probe data, to determine a location of a user device and a corresponding uncertainty or accuracy associated with the determined location. Based upon a relationship of the uncertainty or accuracy associated with the determined location and a predefined threshold, the program code instructions are also configured to cause the user device to provide first user guidance towards a first region having less uncertainty, or more accuracy, than the uncertainty, or accuracy, associated with the determined location. For example, in an instance in which the uncertainty, or accuracy, associated with the determined location fails to satisfy a predefined threshold, the program code instructions are configured to cause the user device to provide first user guidance towards a first region having less uncertainty, or more accuracy, than the uncertainty, or accuracy, associated with the determined location. Conversely, in an instance in which the uncertainty, or accuracy, associated with the determined location satisfies the predefined threshold, the program code instructions are configured to cause the user device to provide second user guidance towards a second region in which probe data is to be collected.

The uncertainty associated with a determined location within the second region is greater than the uncertainty associated with a determined location within the first region. Stated differently, the accuracy associated with a determined location within the second region is less than the accuracy associated with a determined location within the first region. For example, the first and second regions may be outdoor and indoor regions, respectively. The computer-executable program code instructions of an example embodiment also include program code instructions configured to determine the second region for which the second user guidance is provided based upon the quantity of the probe data that has been collected in the second region. In this embodiment, the program code instructions may be configured to determine the second region by determining the second region for which the second user guidance is provided from among one or more regions having greater uncertainty, or less accuracy, than the first region. In an example embodiment, the computer-executable program code instructions also include program code instructions configured to determine the second region for which the second user guidance is provided based upon a duration during which probe data is anticipated to be collected with an uncertainty, or accuracy, that satisfies the predefined threshold.

The computer-executable program code instructions also include program code instructions configured to determine the first region for which the first user guidance is provided based upon a respective weight assigned to each of a plurality of regions having less uncertainty, or more accuracy, than the uncertainty, or accuracy, associated with the determined location. The respective weight assigned to a respective region of the plurality of regions having less uncertainty, or more accuracy, than the uncertainty, or accuracy, associated with the determined location may be based upon a distance between the location of the user device that most recently had a corresponding uncertainty, or accuracy, that satisfied the predefined threshold and a location of the respective region. Alternatively, the respective weight assigned to a respective region of the plurality of regions having less uncertainty, or more accuracy, than the uncertainty, or accuracy, associated with the determined location is based upon a quantity of probe data that has been collected proximate the respective region.

The computer-executable program code instructions of an example embodiment also include program code instructions configured to modify the predefined threshold based upon a measure of the probe data that has been collected. Additionally or alternatively, the computer-executable program code instructions of an example embodiment may include program code instructions configured to modify the predefined threshold based upon a size of a building within which at least some of the probe data is collected.

In yet another embodiment, an apparatus is provided that is configured to collect probe data. While collecting the probe data, the apparatus includes means for determining a location of a user device and a corresponding uncertainty or accuracy associated with the determined location. Based upon a relationship of the uncertainty or accuracy associated with the determined location and a predefined threshold, the apparatus includes means for causing the user device to provide first user guidance towards a first region having less uncertainty, or more accuracy, than the uncertainty, or accuracy, associated with the determined location. For example, in an instance in which the uncertainty, or accuracy, associated with the determined location fails to satisfy a predefined threshold, the apparatus includes means for causing the user device to provide first user guidance towards a first region having less uncertainty, or more accuracy, than the uncertainty, or accuracy, associated with the determined location. Conversely, in an instance in which the uncertainty, or accuracy, associated with the determined location satisfies the predefined threshold, the apparatus includes means for causing the user device to provide second user guidance towards a second region in which probe data is to be collected.

The uncertainty associated with a determined location within the second region is greater than the uncertainty associated with a determined location within the first region. Stated differently, the accuracy associated with a determined location within the second region is less than the accuracy associated with a determined location within the first region. For example, the first and second regions may be outdoor and indoor regions, respectively. The apparatus of an example embodiment also includes means for determining the second region for which the second user guidance is provided based upon the quantity of the probe data that has been collected in the second region. In this embodiment, the means for determining the second region may include means for determining the second region for which the second user guidance is provided from among one or more regions having greater uncertainty, or less accuracy, than the first region. In an example embodiment, the apparatus also includes means for determining the second region for which the second user guidance is provided based upon a duration during which probe data is anticipated to be collected with an uncertainty, or accuracy, that satisfies the predefined threshold.

The apparatus also includes means for determining the first region for which the first user guidance is provided based upon a respective weight assigned to each of a plurality of regions having less uncertainty, or more accuracy, than the uncertainty, or accuracy, associated with the determined location. The respective weight assigned to a respective region of the plurality of regions having less uncertainty, or more accuracy, than the uncertainty, or accuracy, associated with the determined location may be based upon a distance between the location of the user device that most recently had a corresponding uncertainty, or accuracy, that satisfied the predefined threshold and a location of the respective region. Alternatively, the respective weight assigned to a respective region of the plurality of regions having less uncertainty, or more accuracy, than the uncertainty, or accuracy, associated with the determined location is based upon a quantity of probe data that has been collected proximate the respective region.

The apparatus of an example embodiment also includes means for modifying the predefined threshold based upon a measure of the probe data that has been collected. Additionally or alternatively, the apparatus of an example embodiment includes means for modifying the predefined threshold based upon a size of a building within which at least some of the probe data is collected.

### BRIEF DESCRIPTION OF THE DRAWINGS

Having thus described example embodiments of the present disclosure in general terms, reference will now be made to the accompanying drawings, which are not necessarily drawn to scale, and wherein:
Figure 1 is a perspective view of a building within which probe data is to be collected;
Figure 2 is a block diagram of an apparatus that may be specifically configured in accordance with an example embodiment of the present disclosure;
Figure 3 is a flowchart illustrating operations performed, such as by the apparatus of Figure 2, in accordance with an example embodiment of the present disclosure;
Figure 4 illustrates a grid pattern on the floorplan of the first floor of a building of Figure 1 as well as the path taken by a user device and examples of the weights assigned to different grids in accordance with an example embodiment of the present disclosure;
Figure 5 illustrates a grid pattern on the floorplan of the first floor of the building of Figure 1 which illustrates different groups of grids that are differently prioritized in accordance with an example embodiment in relation to the collection of probe data based, for example, on the quantity of probe data previously collected within the different regions; and
Figure 6 illustrates a grid pattern on the floor plan of the first floor of the building of Figure 1 which illustrates examples of the first user guidance and second user guidance provided in accordance with an example embodiment depending upon a relationship of the uncertainty or accuracy of a location determined in conjunction with the collection of probe data relative to a predefined threshold.

### DETAILED DESCRIPTION

Some embodiments of the present invention will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the scope of embodiments of the present invention.

A method, apparatus and computer program product are provided in accordance with an example embodiment in order to collect probe data and, more particularly, to guide the collection of probe data. While probe data may be collected in any of a variety of different settings, the method, apparatus and computer program product of an example embodiment are configured to facilitate the collection of probe data indoors and in other locations, such as urban canyons, within which the location of a user device utilized to collect the probe data cannot be determined with sufficient accuracy. By guiding the collection of probe data, the method, apparatus and computer program product of an example embodiment facilitate the collection of more consistently accurate and complete probe data to allow, for example, the creation and updating of radio maps for these settings in which it may be difficult to otherwise determine the location of a user device. Based upon the radio maps, applications that are dependent upon the location of a user device carried by a user may be reliably supported including a variety of navigation and mapping applications.

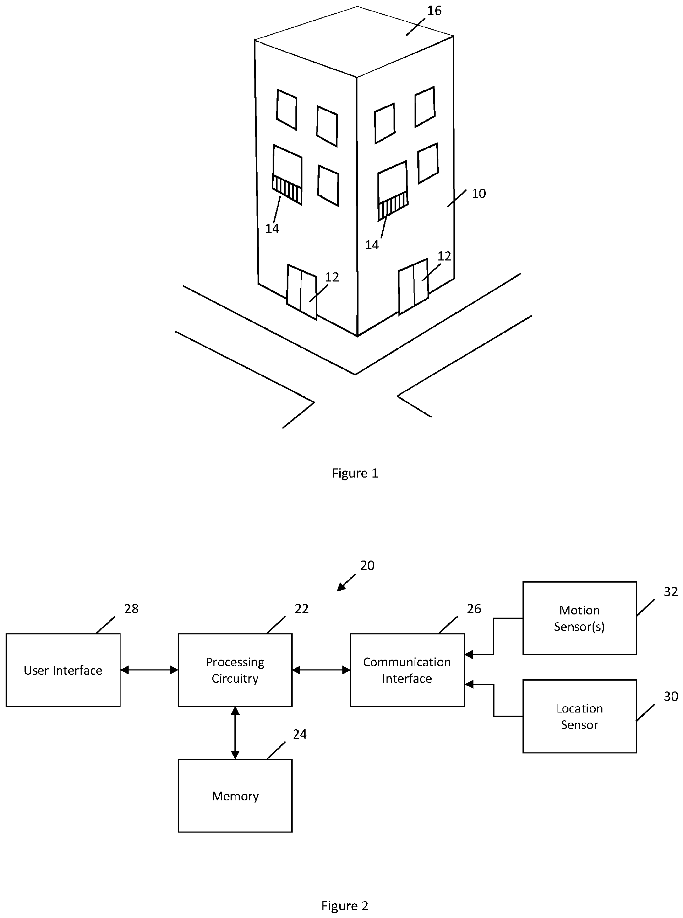

One example of an indoor setting through which one or more users carrying respective user devices may be guided in order to collect probe data is depicted in Figure 1. As shown, a three-story building 10 can be entered by doors 12 on two opposed sides of the building. In order to support applications reliant upon the accurate determination of the location of a user carrying a user device, a radio map may be created for each floor of the building. However, outdoor positioning techniques, such as techniques reliant upon GNSS, cannot generally provide accurate location information for a user device within the building when the user device is carried by a user who has been in the building for a period of time since the accuracy of the location information generally erodes over time as the user device remains within the building.

In accordance with an example embodiment, however, an apparatus 20 is provided that is configured to guide the collection of probe data. The apparatus may be embodied by any of a variety of computing devices. In an example embodiment, the apparatus is embodied by a network-based computing device, such as a server, a computer workstation, a distributed network of computing devices, a personal computer or any other type of network-based computing device. In this example embodiment, the apparatus is in communication with one or more user devices that are collecting probe data in order to guide the collection of probe data by the user devices. Alternatively, the apparatus may be embodied by a user device, such as a mobile terminal including, for example, a personal digital assistant (PDA), mobile telephone, smart phone, personal navigation device, smart watch, tablet computer, or any combination of the aforementioned and other types of portable computer devices. In other example embodiments, the apparatus may be collectively embodied by two or more computing devices configured to cooperate in order to perform the functions described herein. In this example embodiment, the apparatus may be embodied by a combination of a network-based computing device and one or more user devices.

Regardless of the type of computing device that embodies the apparatus 20, the apparatus of an example embodiment depicted in Figure 2 includes, is associated with or is in communication with processing circuitry 22, a memory 24 and a communication interface 26. In some embodiments, the apparatus also optionally includes, is associated with or is in communication with a user interface 28, such as in an embodiment in which the apparatus is embodied by a user device. In an embodiment in which the apparatus is embodied by a user device, the apparatus may optionally include, be associated with or be in communication with one or more sensors including, for example, a location sensor 30 and/or one or more motion sensors 32.

In some embodiments, the processing circuitry 22 (and/or co-processors or any other processors assisting or otherwise associated with the processing circuitry) can be in communication with the memory 24 via a bus for passing information among components of the apparatus 20. The memory can be non-transitory and can include, for example, one or more volatile and/or non-volatile memories. In other words, for example, the memory may be an electronic storage device (for example, a computer readable storage medium) comprising gates configured to store data (for example, bits) that can be retrievable by a machine (for example, a computing device like the processing circuitry). The memory can be configured to store information, data, content, applications, instructions, or the like for enabling the apparatus to carry out various functions in accordance with an example embodiment of the present disclosure. For example, the memory can be configured to buffer input data for processing by the processing circuitry. Additionally or alternatively, the memory can be configured to store instructions for execution by the processing circuitry.

The processing circuitry 22 can be embodied in a number of different ways. For example, the processing circuitry may be embodied as one or more of various hardware processing means such as a processor, a coprocessor, a microprocessor, a controller, a digital signal processor (DSP), a processing element with or without an accompanying DSP, or various other processing circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry can include one or more processing cores configured to perform independently. A multi-core processor can enable multiprocessing within a single physical package. Additionally or alternatively, the processing circuitry can include one or more processors configured in tandem via the bus to enable independent execution of instructions, pipelining and/or multithreading.

In an example embodiment, the processing circuitry 22 can be configured to execute instructions stored in the memory 24 or otherwise accessible to the processing circuitry. Alternatively or additionally, the processing circuitry can be configured to execute hard coded functionality. As such, whether configured by hardware or software methods, or by a combination thereof, the processing circuitry can represent an entity (for example, physically embodied in circuitry) capable of performing operations according to an embodiment of the present disclosure while configured accordingly. Thus, for example, when the processing circuitry is embodied as an ASIC, FPGA or the like, the processing circuitry can be specifically configured hardware for conducting the operations described herein. Alternatively, as another example, when the processing circuitry is embodied as an executor of software instructions, the instructions can specifically configure the processing circuitry to perform the algorithms and/or operations described herein when the instructions are executed. However, in some cases, the processing circuitry can be a processor of a specific device (for example, a computing device) configured to employ an embodiment of the present disclosure by further configuration of the processor by instructions for performing the algorithms and/or operations described herein. The processing circuitry can include, among other things, a clock, an arithmetic logic unit (ALU) and/or one or more logic gates configured to support operation of the processing circuitry.

The apparatus 20 of an example embodiment can also include the communication interface 26. The communication interface can be any means such as a device or circuitry embodied in either hardware or a combination of hardware and software that is configured to receive and/or transmit data from/to other electronic devices in communication with the apparatus, such as by providing for communication between a network-based computing device and a user device. The communication interface can be configured to communicate in accordance with various wireless protocols including Global System for Mobile Communications (GSM), such as but not limited to Long Term Evolution (LTE). In this regard, the communication interface can include, for example, an antenna (or multiple antennas) and supporting hardware and/or software for enabling communications with a wireless communication network. In this regard, the communication interface can include, for example, an antenna (or multiple antennas) and supporting hardware and/or software for enabling communications with a wireless communication network. Additionally or alternatively, the communication interface can include the circuitry for interacting with the antenna(s) to cause transmission of signals via the antenna(s) or to handle receipt of signals received via the antenna(s). In some environments, the communication interface can alternatively or also support wired communication.

The apparatus 20 may also optionally include a user interface 28 that may, in turn, be in communication with the processing circuitry 22 to provide output to the user and, in some embodiments, to receive an indication of a user input. For example, the apparatus may include a user interface in those example embodiments in which the apparatus is embodied by a user device that is utilized to guide the collection of probe data. The user interface may include a display and, in some embodiments, may also include a keyboard, a mouse, a joystick, a touch screen, touch areas, soft keys, one or more microphones, a plurality of speakers, or other input/output mechanisms. In one embodiment, the processing circuitry may comprise user interface circuitry configured to control at least some functions of one or more user interface elements such as a display and, in some embodiments, a plurality of speakers, a ringer, one or more microphones and/or the like. The processing circuitry and/or user interface circuitry embodied by the processing circuitry may be configured to control one or more functions of one or more user interface elements through computer program instructions (for example, software and/or firmware) stored on a memory accessible to the processing circuitry (for example, memory 24, and/or the like).

In an embodiment in which the apparatus 20 is embodied by a user device, the apparatus may also include, be associated with or be in communication with a location sensor 30. The location sensor may be embodied in various manners but, in one embodiment, is a location sensor utilized in conjunction with outdoor positioning technologies. As such, the location sensor of an example embodiment is a GNSS sensor, such as a Global Positioning System (GPS) sensor, configured to communicate with the GNSS and to determine the location of the user device based thereupon. As shown in Figure 2, in an instance in which the apparatus is embodied by a user device, the apparatus may also include, be associated with or otherwise be in communication with one or more motion sensors 32 configured to collect and/or determine respective parameters related to the motion of the user device. Any of a variety of different motion sensors may be included, such as an accelerometer, a gyroscope, a magnetometer, a barometer, etc. Additionally, the apparatus may include, be associated with or be in communication with any of a variety of other sensors, such as those that rely upon the receipt of radio signals.

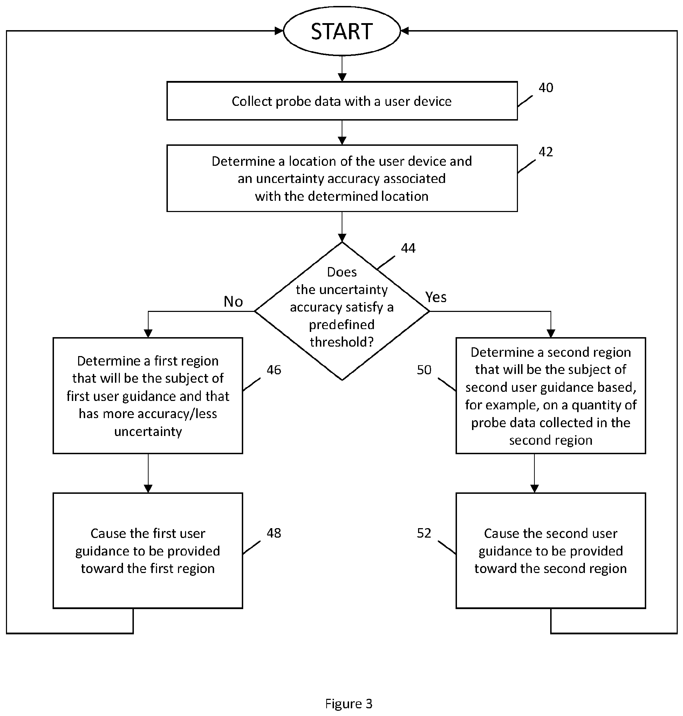

Referring now to Figure 3, the operations performed, such as by the apparatus 20 of Figure 2, in accordance with an example embodiment are depicted. As shown in block 40, probe data is collected with a user device. The probe data may include a plurality of probe data points collected at different points in time. In an embodiment in which the apparatus is embodied by the user device, the apparatus includes means, such as the processing circuitry 22, the communication interface 26 or the like, for collecting probe data. Alternatively, in an embodiment in which the apparatus is embodied by a network-based computing device, the probe data may be collected by one or more user devices and provided to the apparatus, such as via the communication interface, for generation or updating of a radio map by the processing circuitry. Although the probe data will be described hereinafter in relation to the collection of probe data within an indoor setting, such as within the building 10 of Figure 1, this discussion is provided by way of example and not of limitation. In this regard, probe data may be collected in a variety of different indoor settings other than the building depicted in Figure 1. Further, probe data may be collected outdoors, such as in outdoor settings, e.g., urban canyons, for which the location cannot consistently and reliably be determined by outdoor positioning techniques, such as outdoor positioning techniques dependent upon GNSS. For purposes of example, however, probe data will hereinafter be described as being collected within the building depicted within Figure 1.

The probe data that is collected includes information regarding the received signal strength (RSS) that is measured by a user device. The received signal strength is a measure of the power present in a received radio signal. The received signal strength may be defined in various manners including as a received signal strength indicator, a received channel power indicator or the like. The probe data also includes an indication of the location of the user device at the time at which the signals were received from which the received signal strength was measured. Further, the probe data may include a timestamp indicating that time at which the signals were received.

The location of the user device at the time at which the signals were received from which the received signal strength is measured may be defined based upon information provided by the sensors, such as the location sensor 30 and/or one or more motion sensors 32, of the user device. In conjunction with the collection of the probe data, the apparatus 20 includes means, such as the processing circuitry 22, the communication interface 26 or the like, for determining the location of the user device. See block 42 of Figure 3. In an example embodiment, the apparatus, such as the processing circuitry, the communication interface or the like, is configured to receive information from the location sensor, such as a GNSS sensor, that provides an indication of the location of the user device. In some embodiments, the apparatus, such as the processing circuitry, the communication interface or the like, also receives information from one or more motion sensors that facilitates the determination of the location of the user device. For example, based upon a prior location of the user device, such as the location of the user device at the time at which the previous probe data point was collected, the apparatus, such as the processing circuitry, may be configured to determine the location associated with a current probe data point based upon information provided by a motion sensor, e.g., an accelerometer, a gyroscope, a magnetometer, etc., indicative of the movement of the user device between the times at which the probe data points were collected.

In an example embodiment in which a user device includes a plurality of sensors, such as both a location sensor 30 and one or more motion sensors 32, the apparatus 20, such as the processing circuitry 22, is configured to fuse the information provided by the plurality of sensors, such as the information provided by the location sensor and the one or more motion sensors, in order to determine the location of the user device based upon a combination of the information provided by the plurality of sensors. In this example embodiment, the apparatus, such as the processing circuitry, may include a filter, such as a Kalman filter, a particle filter or other Bayesian filter, that is configured to perform sensor fusion on the information provided by the plurality of sensors, such as the location sensor and the one or more motion sensors, to determine the location of the user device.

As also shown in block 42, the apparatus 20 of this example embodiment also includes means, such as the processing circuitry 22, the communication interface 26 or the like, for determining the uncertainty and/or the accuracy, associated with the location that has been determined for the respective probe data point. In an instance in which the uncertainty is low and the accuracy is correspondingly high, the location that is determined in conjunction with the collection of the probe data is reliable. However, as the uncertainty increases and the accuracy correspondingly decreases, the location that is determined in conjunction with the collection of probe data is less reliable. The uncertainty and/or the accuracy may be determined in various manners. For example, the information provided by the sensors, such as the information provided by the location sensor 30 and/or the information provided by the one or more motion sensors 32, may include or be associated with information defining the uncertainty in the data and/or the accuracy of the data provided by the sensors. As another example, in an embodiment in which the apparatus, such as the processing circuitry, includes a filter, such as a Kalman filter, a particle filter or the like, is configured to fuse the information provided by a plurality of sensors, the filter may also be configured to provide an indication of the uncertainty and/or the accuracy associated with the determined location.

By way of an example relative to the collection of probe data within the building 10 of Figure 1, a user device may initially be positioned outdoors such that the probe data collected by the user device has a determined location with low uncertainty and correspondingly high accuracy. Once the user device enters the building, however, the location determined in conjunction with the probe data generally has increased uncertainty and less accuracy with the uncertainty increasing and the accuracy decreasing as the user device remains indoors for a longer period of time. In this regard, while information provided by the one or more motion sensors 32 may delay or slow the deterioration of the accuracy associated with the location provided by a location sensor 30 that relies upon the reception of satellite signals, such as a GNSS sensor, the degradation of the accuracy of the location determined by the GNSS sensor typically increases as the user device remains indoors for a longer period of time.

As shown in block 44, the apparatus 20 of this example embodiment includes means, such as the processing circuitry 22 or the like, for determining whether the uncertainty and/or the accuracy satisfy a predefined threshold. With respect to uncertainty, the predefined threshold may be defined as the level of uncertainty above which the determined location is unacceptable and below which the determined location is acceptable. Expressed in terms of accuracy, the predefined threshold may be defined such that above the predefined threshold, the determined location has sufficient accuracy to be acceptable, while below the predefined threshold, the determined location is too inaccurate to be acceptable.

In an instance in which the uncertainty and/or the accuracy fails to satisfy a predefined threshold, the apparatus 20 of an example embodiment includes means, such as the processing circuitry 22 or the like, for determining a first region that will be the subject of first user guidance that directs the user towards the first region in which the location of the user device can be determined with increased accuracy and less uncertainty relative to the accuracy or uncertainty associated with the determined location of the current probe data. See block 46. In this regard, the location of a user device within the first region for which first user guidance is to be provided can not only be determined with an uncertainty or accuracy that is improved relative to the uncertainty or accuracy associated with the location determined for the current probe data point, but also with an uncertainty or accuracy that satisfies the predefined threshold.

The apparatus 20, such as the processing circuitry 22, of an example embodiment may be configured to determine the first region that would be the subject of the first user guidance in various manners. In one example embodiment, however, the apparatus, such as the processing circuitry, is configured to determine the first region by identifying one or more regions that have been predefined to be regions in which the location may be determined with an uncertainty and/or accuracy that satisfies the predefined threshold. With reference to the building 10 of Figure 1 by way of example, regions in which the location may be determined with an uncertainty and/or accuracy that satisfies the predefined threshold may be defined to be outdoors relative to the building, on the porches 14 illustrated on the second floor or on the roof 16 of the building. Additionally or alternatively, other regions in which a location of the user device may be determined with an uncertainty and/or an accuracy that satisfies the predefined threshold may be defined including, for example, one or more regions, including indoor regions, in which the location may be accurately determined based upon a radio localization system, a video-based localization system or the like.

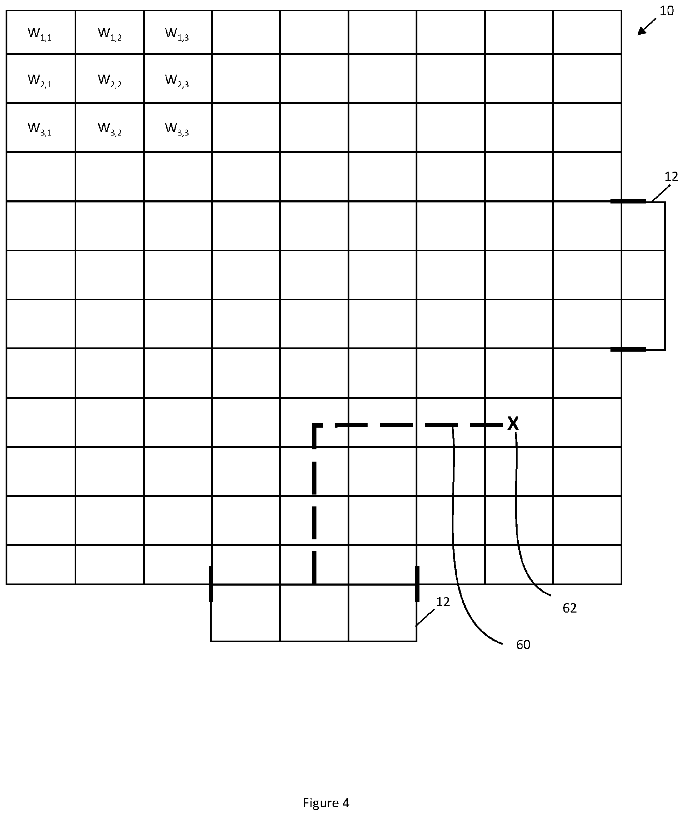

In an embodiment in which a plurality of first region candidates are determined in which the location can be determined with an uncertainty and/or an accuracy that satisfies the predefined threshold, the apparatus 20 of an example embodiment includes means, such as the processing circuitry 22 or the like, for ranking the first region candidates. Although the regions may be defined in various manners and the apparatus, such as the processing circuitry, may be configured to rank the first region candidates in different manners, the apparatus, such as the processing circuitry, of an example embodiment defines a grid structure that divides the area in which probe data is being collected as well as a section outside of, but adjacent to the area, such as outdoors, into a plurality of grids, such as shown in Figure 4. Each grid may be represented by a grid point, such as the center point of the grid. Each grid of this example embodiment in which the location may be determined with reduced uncertainty and/or increased accuracy, such as an uncertainty or accuracy that satisfies the predefined threshold, may represent a respective first region candidate.

The first region candidates at which the location can be determined with reduced uncertainty and/or increased accuracy may then be weighted to facilitate the ranking of the first region candidates. The apparatus 20, such as the processing circuitry 22, may be configured to weight the first region candidates in any of a variety of different manners. For example, the apparatus, such as the processing circuitry, of an example embodiment is configured to assign a weight to a respective first region candidate based upon the distance between the location of the user device at which a probe data point was most recently collected for which the determined location had an uncertainty or an accuracy that satisfied the predefined threshold and the location of the respective first region candidate. With reference to Figure 4, the dashed line 60 represents the path taken by the user during the initial collection of probe data with the location 62 representing the location of the user device at which a probe data point was most recently collected for which the determined location had an uncertainty or an accuracy that satisfied the predefined threshold.

In this example embodiment, the weight that is assigned a respective first region candidate may have a direct relationship to this distance. In this regard, the weight that is assigned a respective first region candidate may be an increasing function of distance such that a first region candidate that is further from the location of the user device at which a probe data point was most recently collected for which the determined location had an uncertainty or an accuracy that satisfied the predefined threshold is assigned a greater weight than the weight assigned to a first region candidate that is closer to the location of the user device at which a probe data point was most recently collected for which the determined location had an uncertainty or an accuracy that satisfied the predefined threshold. As such, the weight assigned in accordance with this example embodiment will incent the determination of a first region in which the location associated with probe data can be determined accurately, but that is further away from the user so as to increase the likelihood that probe data is collected throughout the entire area and to provide diverse location estimates from various outdoor regions, such as on opposite sides of the building, to enable more accurate location determination for probe data inside the building.

Additionally or alternatively, the apparatus 20, such as the processing circuitry 22, of an example embodiment may be configured to determine the weight assigned to the respective first region candidate based upon the quantity of probe data that has been collected proximate the respective first region candidate, such as the quantity of probe data that has been collected within a predefined distance of the first region candidate, and, in one embodiment, within the area, such as indoor setting, for which probe data is being collected that is also within the predefined distance of the first region candidate. In this example embodiment, the weight has an inverse relationship with respect to the quantity of probe data that has been collected proximate the first region candidate. Thus, a smaller weight is assigned to a first region candidate in an instance in which a substantial quantity of probe data has already been collected proximate the first region candidate. Conversely, a larger weight is assigned to a first region candidate in an instance in which little, if any, probe data has been collected proximate the first region candidate. Thus, the weight that is assigned based upon the quantity of the probe data that has been collected proximate the first region candidate creates an incentive to direct the user to a first region near which less probe data has been collected.

The apparatus 20, such as the processing circuitry 22, of another example embodiment is configured to determine the weight associated with the first region candidate based upon a determination as to whether the first region candidate is indoors or outdoors, such as may be determined based upon a map accessible to the processing circuitry, such as may be stored by the memory 24. In this example embodiment, the apparatus, such as the processing circuitry, is configured to assign a smaller weight, such as a weight closer to zero, in an instance in which the first region candidate is indoors and to assign a larger weight, such as a weight closer to 1, if the first region candidate is outdoors. The apparatus, such as the processing circuitry, of another example embodiment is configured to determine the weight assigned to a first region candidate based upon the proximity of the first region candidate to a building entrance, such as may be determined by reference to the map. In this example embodiment, the weight is a decreasing function of the distance between the first region candidate and the building entrance such that the weight has an inverse relationship to the distance between the first region candidate and the building entrance. Thus, the apparatus, such as the processing circuitry, of this example embodiment is configured to assign a larger weight in an instance in which the first region candidate is closer to a building entrance than in an instance in which the first region candidate is further from a building entrance and a smaller weight is assigned.

In yet another example embodiment, in an instance in which a map of the area for which probe data is to be collected is accessible, such as by being stored in memory 24 or in another database accessible to the processing circuitry 22, the apparatus 20, such as the processing circuitry, is configured to determine the weight assigned to a first region candidate based upon the proportions resulting after the area in which probe data is to be collected is split. In this example embodiment, the apparatus, such as the processing circuitry, is configured to define a line segment that extends through both the location at which the user device collected a probe data point for which the determined location had an uncertainty or an accuracy that satisfied the predefined threshold and as well as the location of the first region candidate. This line segment splits the area within which the probe data is being collected, such as by splitting the building footprint of Figure 1, into two sub-areas. The apparatus, such as the processing circuitry, of this example embodiment is configured to determine the proportion defined by the two resulting sub-areas and to determine the smaller of the two proportions.

In this example embodiment, the apparatus 20, such as the processing circuitry 22, is configured to define the weight to be an increasing function of the smaller proportion such that the weight has a direct relationship to the smaller proportion. Thus, if the line segment splits the area in which probe data is being collected into two equal sub-areas such that the resulting proportion is 1:1, the apparatus, such as the processing circuitry, is configured to assign a larger weight to the first region candidate. Conversely, if the line segment splits the area within which probe data is being collected into two sub-areas of very different sizes, the apparatus, such as the processing circuitry, is configured to assign a lower weight to the first region candidate. Thus, the determination of the weight based on the proportion of the resulting sub-areas incentivizes the selection of a first region that will direct the user to different portions of the area within which the probe data is being collected, thereby encouraging the collection of probe data throughout the entire area as well as the diversification of the determined locations which enables more accurate determination of the locations for the probe data.

While a plurality of different techniques for determining the weight assigned to the first region candidates have been described above, the apparatus 20, such as the processing circuitry 22, of other example embodiments may be configured to determine the weight in other manners. Additionally, in some embodiments, the apparatus, such as the processing circuitry, is configured to determine the weight for the first candidate regions in two or more different manners. In these example embodiments, the apparatus, such as the processing circuitry, is also configured to determine a weight, such as a composite weight, for the first region candidates based upon a combination of the different weights determined for the same first region candidate. In this regard, for a respective first region candidate, the apparatus, such as the processing circuitry, may be configured to sum the different weights that have been determined in order to determine the composite weight. Alternatively, the apparatus, such as the processing circuitry, may be configured to weight the different weights themselves that have been determined in relation to their respective contributions to the composite weight for a respective first region candidate. As shown in the upper left portion of Figure 4, weights w_{i,j} can be assigned to each grid in row i and column j. For purposes of illustration, weights are only depicted for one portion of the area, but weights are typically defined for each first region candidate, both indoors and outdoors, such as for the grids defined outside the doors 12 of the building 10.

As shown in block 48 of Figure 3, the apparatus 20 also includes means, such as the processing circuitry 22, the communication interface 26, the user interface 28 or the like, for causing the user device to provide first user guidance toward a first region in which the location of the user device can be determined with increased accuracy and less uncertainty relative to the accuracy or uncertainty associated with the determined location of the current probe data. In one embodiment, the first user guidance directs the user toward a first region in which the location of a user device can not only be determined with an uncertainty or accuracy that is improved relative to the uncertainty or accuracy associated with the location determined for the current probe data point, but also with an uncertainty or accuracy that satisfies the predefined threshold.

In an embodiment in which the apparatus 20 is embodied by the user device, the apparatus, such as the processing circuitry 22, may be configured to cause the first user guidance to be presented via the user interface 28. Alternatively, in an embodiment in which the apparatus is embodied by a network-based computing device, the apparatus, such as the processing circuitry, may be configured to communicate with the user device, such as via the communication interface 26, in order to direct the user device to provide the first region guidance, such as via the user interface of the user device.

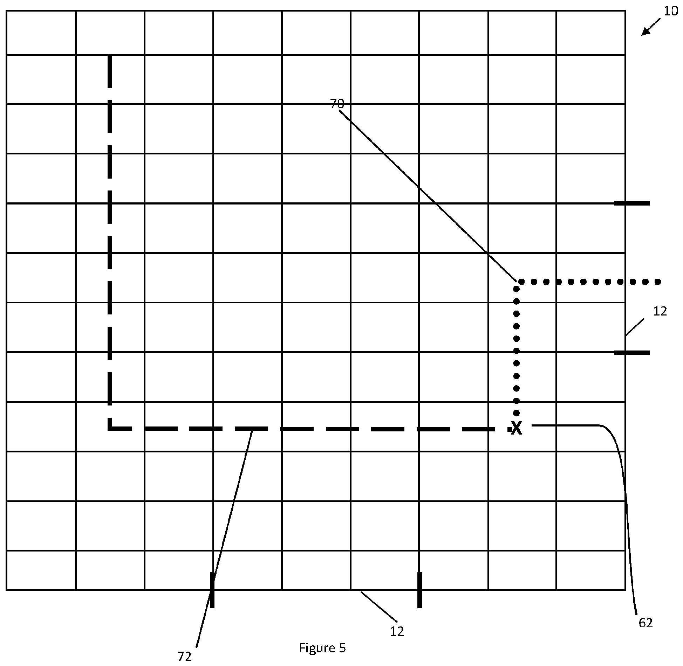

The first user guidance may be provided in various manners. For example, the first user guidance may direct the user carrying the user device to proceed to the first region, such as by proceeding outdoors or proceeding to a designated location, such as a porch 14 or a rooftop 16 at which the location of the user device may be determined with more accuracy and less uncertainty. In this regard, the first user guidance may identify a single first region to which the user carrying the user device should proceed, such as the first region candidate that is ranked the highest as a result of having the greatest weight from amongst the first region candidates. By way of example, the dashed line 70 in Figure 5 is an example of the first user guidance directing the user from the current location 62 to outdoors through door 12. Alternatively, the first user guidance may provide information regarding a plurality of first region candidates to which the user carrying the user device may proceed. The user may then proceed to any of the first region candidates that are identified.

In an example embodiment in which the first region candidates are ranked based upon the weights associated therewith, the first user guidance regarding the plurality of first region candidates may be provided in the form of an indication as to the ranked order of the first region candidates. For example, the first user guidance may list the first region candidates in a descending order with the most highly ranked first region candidate having the greatest weight identified first and the most lowly ranked first region candidate having the least weight identified last. In this example embodiment, the first user guidance may be presented in the form of a map with the rankings, e.g., 1, 2, 3, etc., depicted in conjunction with the respective first region candidates. Still further, the first user guidance may be provided in the form of a game played by the user carrying the user device with the user earning a reward or other credit based upon the collection of probe data. In this example embodiment, the first user guidance may be in the form of tokens that are positioned coincident with the first region candidates with the value associated with a token being associated with the ranking of the respective first region candidate such that the user earns a larger reward or credit by moving to a first region candidate that is more highly ranked, thereby incentivizing the user to proceed to the first candidate region having the highest ranking to receive the token having the greatest value. For example, a map of the area within which probe data is to be collected may be displayed by the user interface 28 with the tokens positioned coincident with the respective first region candidates.

The user carrying the user device may then relocate to a first region based upon the first user guidance. Once at the first region, the user device may collect additional probe data with the location determined for the additional probe data having increased accuracy and reduced uncertainty. Once the probe data has been collected at the first region with a location determined with increased accuracy and reduced uncertainty, the user carrying the user device may proceed throughout the area within which probe data is to be collected, such as by re-entering the building 10 and moving throughout the indoor setting, in order to collect additional probe data within the area. By having temporarily relocated to the first region, however, the location determined in conjunction with the probe data collected as the user device moves throughout the area, such as throughout the indoor setting is improved in terms of uncertainty and accuracy relative to the location determined in conjunction with the probe data collected prior to being directed to the first region. In this regard, the probe data collected within the area, such as following reentry of the building, includes a location that is determined with an uncertainty and an accuracy that satisfies the predefined threshold, at least for some period of time during movement of the user device throughout the area.

While probe data is being collected in the first region with a location that is determined with improved accuracy and less uncertainty, the apparatus 20, such as the processing circuitry 22, the communication interface 26, the user interface 28 or the like, may be configured to provide an alert, such as a notification, to the user device that indicates that the user can again proceed with collecting probe data within the area for which probe data is to be collected, such as within the indoors area. The user may then be permitted to move throughout the area as desired with no particular direction or guidance. Alternatively, the apparatus, such as the processing circuitry, the communication interface, the user interface or the like, may be configured to provide guidance as to those portions of the area within which probe data is to be collected to which the user should proceed. Although the portions of the area to which the user should proceed may be determined in various manners, the apparatus, such as the processing circuitry, of an example embodiment is configured to determine those portions of the area to which the user is directed based upon the quantity of probe data collected in the different portions of the area. As described below, for example, the area within which probe data is to be collected may be divided into a plurality of grids and the apparatus, such as the processing circuitry, may be configured to determine the number of probe points collected within each respective grid, such as the total number of probe points collected within the grid or the total number of probe points collected within a most recent predetermined period of time. In this example embodiment, the apparatus, such as the processing circuitry, is configured to provide guidance or direction to those portions of the area within which probe data is to be collected in accordance with a function that has an inverse relationship to the quantity of the probe data that has been collected for the respective portions of the area. As such, the apparatus, such as the processing circuitry, is configured to direct the user to a portion of the area within which probe data is to be collected for which a small amount, if any, probe data has previously been collected, thereby incentivizing the complete coverage of the area in terms of the probe data that is collected.

In an instance in which the uncertainty or the accuracy associated with the determined location of a probe data point is determined in block 44 of Figure 3 to satisfy a predefined threshold, such as in an instance in which the uncertainty is less than a predefined threshold or in an instance in which the accuracy is greater than the predefined threshold, probe data may continue to be collected within the area, such as within the building 10. In this example embodiment, the apparatus 20 of an example embodiment includes means, such as the processing circuitry 22 or the like, for determining a second region that will be the subject of second user guidance based, for example, on a quantity of probe data collected in the second region. See block 50 of Figure 3. The apparatus further includes means, such as the processing circuitry, the communication interface 26, the user interface 28 or the like, for causing the second user guidance to be provided with the second user guidance directing the user carrying the user device toward the second region in which probe data is to be collected. See block 52.

The apparatus 20, such as the processing circuitry 22, is configured to determine the second region in any of various manners. In one embodiment, however, the apparatus, such as the processing circuitry, is configured to determine the second region for which second user guidance is to be provided based upon the quantity of the probe data that has been collected in the second region. In this regard, the apparatus, such as the processing circuitry, of an example embodiment is configured to track the quantity of the probe date collected in each of a plurality of different regions into which the area for which probe data is to collected is divided. Although the area in which probe data is to be collected, such as a floor of a building, may be divided into different regions in various manners, the area for which probe data is to be collected may be divided into a plurality of grids, such as shown in Figure 4 with respect to the first floor of the building 10 of Figure 1. Although each grid need not necessarily be the same size and shape, the area for which probe data is collected in accordance with one example embodiment is divided into a plurality of grids, each having the same size and shape, such as rectangular, and more particularly, a square shape that completely fill the area for which probe data is to be collected.

Regardless of the manner in which the area for which probe data is to be collected is divided into regions, the apparatus 20, such as the processing circuitry 22, of this example embodiment is configured to maintain a count of the quantity of probe data, such as the number of probe data points, that have been collected with a determined location within a respective region. In this regard, the count of probe data points may include all probe data points that have been collected for a respective region or only those probe data points that have been collected for a respective region within a most recent predetermined period of time.

The apparatus 20, such as the processing circuitry 22, may be configured to maintain the count of probe data points for the respective region and may store the count of probe data points, such as in memory 24. In another embodiment, however, the count of probe data points that have been collected for each respective region of the area is maintained remotely, such as within a database with which the apparatus is in communication, such as by the communication interface 26. In this regard, the count of the probe data points collected for each region of an area in which probe data is to be collected may be maintained by a database as the probe data points may be collected by a plurality of different user devices with the count being an aggregation of the probe data points collected by the plurality of user devices. In this example embodiment, the apparatus, such as the processing circuitry, the communication interface or the like, is configured to access the information regarding the quantity of the probe data that has been collected in the plurality of regions, such as from the database that maintains the information.

The apparatus 20, such as the processing circuitry 22, of an example embodiment is then configured to determine the second region for which second user guidance is to be provided based on the quantity of probe data that has been collected for the different regions. In this example embodiment, the apparatus, such as the processing circuitry, is configured to determine the second region to be a region having a smaller amount of probe data collected therefore than other regions, such as the region for which the least amount of probe data has been collected. In an example embodiment, the second region may be determined by the processing circuitry to be a region having less than a predefined quantity of probe data collected therefor.

The second region towards which the second user guidance directs the user generally has greater uncertainty and less accuracy associated with the location that is determined for probe data collected within the second region than the location determined for the probe data collected in the first region. For example the second region may be indoors, while the first region is outdoors. However, the determination that the uncertainty and/or accuracy associated with the location determined for the probe data that is currently being collected satisfies the predefined threshold indicates that the user device can continue to collect probe data in the second region with sufficiently low uncertainty and sufficiently high accuracy, even though the uncertainty and accuracy will likely further erode while in the second region.

**In** one example embodiment, the apparatus 20, such as the processing circuitry 22, is configured to determine the second region that is the subject of second user guidance and toward which the user is directed based upon weights assigned to the plurality of regions into which the area for which probe data is to be collected has been divided. Although the area may be divided into regions in various manners, the area is divided by a grid structure comprised of a plurality of grids, each representing a respective region as described above and, as shown, for example, in Figure 4. The weights may be assigned in various manners. In one embodiment, however, the apparatus, such as the processing circuitry, is configured to assign a greater weight, such as weight closer to 1, if the region is indoors and a smaller weight, such as weight closer to 0, if the region is outdoors. As indicated above, the apparatus, such as the processing circuitry, may alternatively or additionally assign a weight to a region based upon the number of probe data points collected for the respective region with the weight being a decreasing function of the number of probe data points. Thus, the weight of this example embodiment has an inverse relationship to the number of probe data points collected for a respective region. Thus, a region for which a larger quantity of probe data points has been collected has a lower weight then a region for which a smaller number of probe data points has been collected.

While a plurality of different techniques for determining the weight assigned to the plurality of regions, that is, second region candidates, have been described, the apparatus 20, such as the processing circuitry 22, of other example embodiments may be configured to determine the weights of these regions in other manners. Additionally, in some embodiments, the apparatus, such as the processing circuitry, is configured to determine the weight for the second candidate regions in two or more different manners. In these example embodiments, the apparatus, such as the processing circuitry, is also configured to determine a weight, such as a composite weight, for the second region candidates based upon a combination of the different weights determined for the same region. In this regard, for a respective second region candidate, the apparatus, such as the processing circuitry, may be configured to sum the different weights that have been determined in order to determine the composite weight. Alternatively, the apparatus, such as the processing circuitry, may be configured to weight the different weights themselves that have been determined in relation to their respective contributions to the composite weight for a respective second region candidate. As described above and by way of example, Figure 4 depicts weights assigned to the grids in the upper left portion of the grid structure.

Based upon the weights, the apparatus 20 of this example embodiment, such as the processing circuitry 22, is configured to determine the second region for which second user guidance will be provided based upon the weights associated with the different regions. In one example embodiment, the apparatus, such as the processing circuitry, may be configured to determine the second region to which second user guidance will be provided as the region with the greatest weight. Based upon the weights associated with the different regions, such as the different grids, the apparatus, such as the processing circuity, the communication interface 26, the user interface 28 or the like, is configured to provide the second user guidance directing the user carrying the user device towards a second region. See block 52 of Figure 3. The second user guidance may be provided in various manners.

In an example embodiment, the second user guidance that is provided may direct the user carrying the user device to or toward the second region that has been determined. As shown in Figure 5, for example, the apparatus 20, such as the processing circuitry 22, the communication interface 26 or the like, may be configured to cause the use interface of the user device to present a display with directions to the second region. In this regard, Figure 5 depicts a graphical representation of the building footprint of the first floor of the building 10 of Figure 1 and a dashed line 72 representing a path from the current location 62 of the user device to the second region. The second user guidance of this example directs the user along a path to second region for which fewer probe data points have been collected. By directing the user carrying the user device toward a region in which fewer probe data points have been collected, the completeness with which probe data points are collected throughout an area is enhanced, thereby improving the resulting radio map and the performance of the positioning applications that rely upon the radio map.

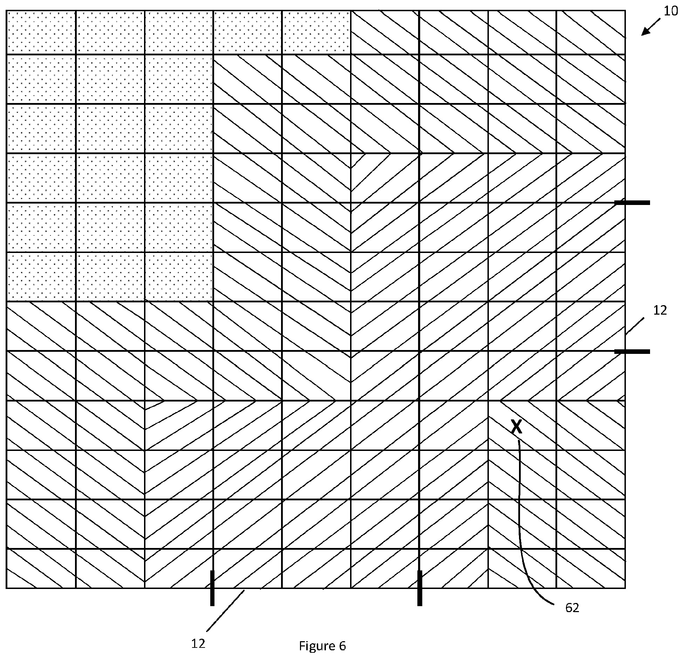

In another example embodiment depicted in Figure 6, the apparatus 20, such as the processing circuitry 22, is configured to divide the second region candidates into different groups depending upon the number of probe data points collected within each region. Ranges defining different quantities of probe data points may be established and the second region candidates may be binned into the ranges such that each second region candidate is included in a single bin depending upon the number of probe data points collected within the respective region. As shown in Figure 6, for example, the grid structure that is overlaid onto the building footprint of the first floor of the building 10 of Figure 1 includes three different groups of grids with each group associated with a different range. A first group represented by the right-leaning hashmarks includes grids for which a large number of probe data points have been collected, such as a result of these grids being located near the doors 12 of the building. In this example embodiment, the grid structure also includes a second group as represented by the left-leaning hashmarks that includes grids for which a medium quantity of probe data points has been collected. Still further, the example of Figure 6 includes a third group including the grids designated by the speckled shading for which the least quantity of probe data points has been collected.

In an example embodiment in which the second user guidance provides information regarding the quantity of probe data points that have been collected in the different regions and potentially incents the user to proceed towards a region for which fewer probe data points have been collected, but does not instruct the user to proceed to a specific region, the apparatus 20, such as the processing circuitry 22, may be configured to cause the user interface 28 to display a representation of the area in which the probe data is to be collected, such as shown in Figure 6, with an indication, such as the different shading, indicating the quantity of probe data collected in the different regions. As opposed to the different forms of shading, the display may represent the different regions with colors associated with the regions that are indicative of the quantity of probe data that has been collected. The information regarding the number of probe data points that have been collected within the different regions may also be represented in other manners that are intuitive to the user, such that the user is able to recognize and be directed toward a second region for which fewer probe data points have been collected.

In an embodiment in which the user collects points or otherwise earns rewards in the context of a game based on the collection of probe data, tokens may be positioned in different regions that may be collected by the user once the user travels to the respective region. The value of the different tokens may have an inverse relationship to the quantity of the probe data that has been collected for a respective region. Thus, the value of the tokens in those regions for which less probe data has been collected are of greater value than the tokens in other regions for which more probe data has already been collected. The user is therefore incented by the tokens to proceed to a second region for which less probe data has been collected in order to collect a higher valued token.

In some embodiments, the apparatus 20, such as the processing circuitry 22, is also configured to determine the second region for which the second user guidance is provided based upon the duration during which the probe data is anticipated to be collected with an uncertainty or an accuracy that continues to satisfy the predefined threshold. The apparatus, such as the processing circuitry, may be configured to determine the duration during which the probe data is anticipated to be collected with an acceptable uncertainty or accuracy in various manners. In one embodiment, however, the anticipated duration of acceptability is based upon the length of time that has elapsed since probe data was collected with an uncertainty or accuracy that satisfies a second predefined threshold, such as second lower threshold in terms of uncertainty or a second higher threshold in terms accuracy relative to the predefined threshold discussed above. In this regard, the second predefined threshold may be established to be a threshold that is satisfied in an instance in which probe data is collected outdoors, such as with a clear line of sight to the GNSS satellites.

In this example and in an instance in which historical information regarding the collection of probe data within the same building indicates that probe data can typically be collected for a predetermined period of time once the user enters the building, the apparatus 20, such as the processing circuitry 22, may be configured to determine the anticipated duration during which the determined location associated with probe data points that are collected will continue to satisfy the predefined threshold in terms of accuracy or uncertainty based on a comparison to the length of time that has elapsed since probe data was collected with an uncertainty or accuracy that satisfies the second predefined threshold.

In an instance in which the user recently entered the building 10, the apparatus 20, such as the processing circuity 22, of this example embodiment is configured to determine that the anticipated duration is greater than in an instance in which the user entered the building longer ago and has already been collected probe data for an extended time within the building. In an instance in which the user recently entered the building and the anticipated duration is greater, the apparatus, such as the processing circuitry, of this example embodiment is configured to determine the second region to be further from the user, such as further from an entrance 12 to the building, such as shown in Figure 5. Alternatively, in an instance in which the user entered the building a longer time ago such that the user is nearing the time at which the user will have been in the building for the predetermined period of time, the apparatus, such as the processing circuitry, of this example embodiment is configured to determine the second region to which second user guidance is provided to be closer to the user such that the user is more likely to reach the second region and collect additional probe data prior to having the uncertainty and/or accuracy associated with the location associated with a probe data point fail to satisfy the predefined threshold.

In some embodiments, the apparatus 20, such as the processing circuitry 22, is also configured to modify the predefined threshold. In one example embodiment, the apparatus, such as the processing circuitry, is configured to modify the predefined threshold based upon a measure of the probe data that has been collected, such as the measure of the probe data that has been collected within the area for which probe data is to be collected. In terms of uncertainty, the apparatus, such as processing circuitry, may be configured to modify the predefined threshold so as to have an inverse relationship to the quantity of the probe data has been collected. Thus, as more probe data is collected, the apparatus, such as the processing circuitry, may be configured to decrease the predefined threshold. By decreasing the predefined threshold, the apparatus, such as the processing circuitry, requires that the probe data that is subsequently collected have locations that are determined with less uncertainty such that the probe data is of a higher quality since a substantial amount of probe data has already been collected. Conversely, in an instance in which little probe data has been collected, the apparatus, such as the processing circuitry, may be configured to increase the predefined threshold, thereby permitting more probe data to be collected with somewhat less concern as to the uncertainty associated with the locations determined for the probe data points.

In terms of accuracy, the apparatus 20, such as processing circuitry 22, may be configured to modify the predefined threshold so as to have a direct relationship to the quantity of the probe data that has been collected. Thus, as more probe data is collected, the apparatus, such as the processing circuitry, may be configured to increase the predefined threshold. By increasing the predefined threshold, the apparatus, such as the processing circuitry, requires that the probe data that is subsequently collected include locations that are determined with greater accuracy, thereby providing for higher quality probe data since a substantial amount of probe data has already been collected. Conversely, in an instance in which little probe data has been collected, the apparatus, such as the processing circuitry, may be configured to decrease the predefined threshold, thereby permitting more probe data to be collected with somewhat less concern as to the accuracy associated with the locations determined for the probe data points.

In another example embodiment, the apparatus 20, such as the processing circuitry 22, is configured to modify the predefined threshold based upon the size of the building within which at least some of the probe data is to be collected. In terms of uncertainty, the apparatus, such as processing circuitry, may be configured to modify the predefined threshold so as to have a direct relationship to the size of the building. Thus, for larger buildings, the apparatus, such as the processing circuitry, may be configured to increase the predefined threshold. By increasing the predefined threshold, more probe data to be collected with less concern as to the uncertainty associated with the locations determined for the probe data points. However, for smaller buildings, the apparatus, such as the processing circuitry, may decrease the predefined threshold, thereby requiring that the probe data that is subsequently collected have locations that are determined with less uncertainty such that the probe data is of a higher quality since it may be easier to collect a more complete set of higher quality probe data for a smaller building.

In terms of accuracy, the apparatus 20, such as processing circuitry 22, may be configured to modify the predefined threshold so as to have a inverse relationship to the size of the building. Thus, for larger buildings, the apparatus, such as the processing circuitry, may be configured to decrease the predefined threshold. By decreasing the predefined threshold, more probe data to be collected with less concern as to the accuracy associated with the locations determined for the probe data points. However, for smaller buildings, the apparatus, such as the processing circuitry, may increase the predefined threshold, thereby requiring that the probe data that is subsequently collected have locations that are determined with more accuracy such that the probe data is of a higher quality.

A method, apparatus 20 and computer program product are therefore provided in order to guide the collection of probe data, such as within an indoor or other setting in which the probe data that is otherwise collected will have a location associated therewith with an undesirably high level of uncertainty and/or an undesirably low level of accuracy. By guiding the collection of probe data, the method, apparatus and computer program product ensure that the probe data that is collected is associated with locations that are determined with sufficient accuracy. The collection of probe data with increased confidence in the quality of probe data correspondingly increases the confidence, both in the radio maps created based upon the probe data and in the eventual use of those radio maps in conjunction with various applications, such as mapping, navigation, etc. The method, apparatus and computer program product of an example embodiment also facilitate the collection of probe data with improved coverage by encouraging the collection of a sufficient quantity of probe data throughout the indoor or other location including in those regions that are otherwise underrepresented in terms of the quantity of probe data that has been collected.

As described above, Figure 3 is a flowchart of an apparatus 20, method, and computer program product configured to identify a selected product based on location according to an example embodiment. It will be understood that each block of the flowchart, and combinations of blocks in the flowchart, may be implemented by various means, such as hardware, firmware, processing circuitry 22, and/or other devices associated with execution of software including one or more computer program instructions. For example, one or more of the procedures described above may be embodied by computer program instructions. In this regard, the computer program instructions which embody the procedures described above may be stored by the memory 24 of the apparatus and executed by the processing circuitry or the like. As will be appreciated, any such computer program instructions may be loaded onto a computer or other programmable apparatus (e.g., hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the flowchart blocks.

Accordingly, blocks of the flowchart support combinations of means for performing the specified functions and combinations of operations for performing the specified functions for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

## Claims

1. A method for collecting probe data, the method performed by an apparatus (20), the method comprising:
while collecting the probe data, determining (42) a location of a user device and a corresponding uncertainty associated with the determined location;
in an instance in which the uncertainty associated with the determined location fails to satisfy a predefined threshold, causing (48) the user device to provide first user guidance towards a first region having less uncertainty than the uncertainty associated with the determined location;
determining (46) the first region for which the first user guidance is provided based upon a respective weight assigned to each of a plurality of regions having less uncertainty than the uncertainty associated with the determined location; and
in an instance in which the uncertainty associated with the determined location satisfies the predefined threshold, causing (52) the user device to provide second user guidance towards a second region in which probe data is to be collected.

2. A method according to Claim 1, wherein the uncertainty associated with a determined location within the second region is greater than the uncertainty associated with a determined location within the first region.

3. A method according to any of Claims 1 and 2, wherein the first and second regions comprise outdoor and indoor regions, respectively.

4. A method according to any of Claims 1 to 3, further comprising determining (50) the second region for which the second user guidance is provided based upon the quantity of the probe data that has been collected in the second region.

5. A method according to Claim 4, wherein determining (50) the second region further comprises determining the second region for which the second user guidance is provided from among one or more regions having greater uncertainty than the first region.

6. A method according to any of Claims 1 to 5, further comprising determining (50) the second region for which the second user guidance is provided based upon a duration during which probe data is anticipated to be collected with an uncertainty that satisfies the predefined threshold.

7. A method according to Claim 1, wherein the respective weight assigned to a respective region of the plurality of regions having less uncertainty than the uncertainty associated with the determined location is based upon a distance between the location of the user device that most recently had a corresponding uncertainty that satisfied the predefined threshold and a location of the respective region.

8. A method according to any of Claims 1 to 7, wherein the respective weight assigned to a respective region of the plurality of regions having less uncertainty than the uncertainty associated with the determined location is based upon a quantity of probe data that has been collected proximate the respective region.

9. A method according to any of Claims 1 to 8, further comprising modifying the predefined threshold based upon a measure of the probe data that has been collected.

10. A method according to any of Claims 1 to 9, further comprising modifying the predefined threshold based upon a size of a building within which at least some of the probe data is collected.

11. An apparatus (20) comprising means configured for performing the method of any of claims 1 to 10.

12. An apparatus (20) according to Claim 11, the apparatus comprising processing circuitry (22) and at least one memory (24) storing computer program code, the at least one memory (24) and the computer program code configured to, with the processing circuitry (22), cause the apparatus (20) to perform the method of any of claims 1 to 10.

13. A computer program code comprising computer-executable program code instructions, the computer-executable program code instructions comprising program code instructions configured to, when executed by an apparatus (20), cause the apparatus to perform the method of any of claims 1 to 10.

14. A computer program code according to claim 13, wherein the computer program code is part of a computer program product, the computer program product comprising at least one non-transitory computer-readable storage medium having the computer-executable program code instructions stored therein.

## Patentansprüche

1. Ein Verfahren zur Erfassung von Messdaten, wobei das Verfahren durch eine Vorrichtung (20) ausgeführt wird, wobei das Verfahren umfasst:
während des Erfassens der Messdaten, Bestimmen (42) eines Standorts eines Benutzergeräts und einer entsprechenden dem bestimmten Standort zugeordneten Unsicherheit;
in einem Fall, in dem die dem bestimmten Standort zugeordnete Unsicherheit einen vordefinierten Schwellenwert nicht erfüllt, Veranlassen (48) des Benutzergeräts, eine erste Benutzerführung in Richtung eines ersten Bereichs bereitzustellen, der eine geringere Unsicherheit aufweist als die dem bestimmten Standort zugeordnete Unsicherheit;
Bestimmen (46) des ersten Bereichs, für den die erste Benutzerführung bereitgestellt wird, basierend auf einer jeweiligen Gewichtung, die jedem einer Vielzahl von Bereichen zugewiesen wird, die eine geringere Unsicherheit aufweisen als die dem bestimmten Standort zugeordnete Unsicherheit; und
in einem Fall, in dem die dem bestimmten Standort zugeordnete Unsicherheit den vordefinierten Schwellenwert erfüllt, Veranlassen (52) des Benutzergeräts, eine zweite Benutzerführung in Richtung eines zweiten Bereichs bereitzustellen, in dem Messdaten zu erfassen sind.

2. Ein Verfahren gemäß Anspruch 1, wobei die Unsicherheit, die einem bestimmten Standort innerhalb des zweiten Bereichs zugeordnet ist, größer ist als die Unsicherheit, die einem bestimmten Standort innerhalb des ersten Bereichs zugeordnet ist.

3. Ein Verfahren gemäß einem der Ansprüche 1 und 2, wobei der erste und der zweite Bereich jeweils Außen- und Innenbereiche umfassen.

4. Ein Verfahren gemäß einem der Ansprüche 1 bis 3, ferner umfassend Bestimmen (50) des zweiten Bereichs, für den die zweite Benutzerführung bereitgestellt wird, basierend auf der Menge der Messdaten, die im zweiten Bereich erfasst wurden.

5. Ein Verfahren gemäß Anspruch 4, wobei das Bestimmen (50) des zweiten Bereichs ferner das Bestimmen des zweiten Bereichs umfasst, für den die zweite Benutzerführung bereitgestellt wird, aus einem oder mehreren Bereichen mit einer größeren Unsicherheit als dem ersten Bereich.

6. Ein Verfahren gemäß einem der Ansprüche 1 bis 5, ferner umfassend Bestimmen (50) des zweiten Bereichs, für den die zweite Benutzerführung bereitgestellt wird, basierend auf einer Dauer, während der die Erfassung von Messdaten mit einer Unsicherheit erwartet wird, die den vordefinierten Schwellenwert erfüllt.

7. Ein Verfahren gemäß Anspruch 1, wobei die jeweilige Gewichtung, die einem jeweiligen Bereich der Vielzahl von Bereichen zugewiesen ist, der eine geringere Unsicherheit aufweist als die dem bestimmten Standort zugeordnete Unsicherheit, auf einem Abstand zwischen dem Standort des Benutzergeräts, das zuletzt eine entsprechende Unsicherheit aufwies, die den vordefinierten Schwellenwert erfüllte, und einem Standort des jeweiligen Bereichs basiert.

8. Ein Verfahren gemäß einem der Ansprüche 1 bis 7, wobei die jeweilige Gewichtung, die einem jeweiligen Bereich der Vielzahl von Bereichen zugewiesen ist, der eine geringere Unsicherheit aufweist als die dem bestimmten Standort zugeordnete Unsicherheit, auf einer Menge von Messdaten basiert, die in der Nähe des jeweiligen Bereichs erfasst wurden.

9. Ein Verfahren gemäß einem der Ansprüche 1 bis 8, ferner umfassend Modifizieren des vordefinierten Schwellenwerts basierend auf einem Messwert der erfassten Messdaten.

10. Ein Verfahren gemäß einem der Ansprüche 1 bis 9, ferner umfassend Modifizieren des vordefinierten Schwellenwerts basierend auf einer Größe eines Gebäudes, in dem zumindest ein Teil der Messdaten erfasst wird.

11. Eine Vorrichtung (20), umfassend Mittel, die zur Ausführung des Verfahrens nach einem der Ansprüche 1 bis 10 konfiguriert sind.

12. Eine Vorrichtung (20) gemäß Anspruch 11, wobei die Vorrichtung einen Verarbeitungsschaltkreis (22) und mindestens einen Speicher (24), der Computerprogrammcode speichert, umfasst, wobei der mindestens eine Speicher (24) und der Computerprogrammcode dazu konfiguriert sind, zusammen mit dem Verarbeitungsschaltkreis (22) die Vorrichtung (20) zu veranlassen, das Verfahren nach einem der Ansprüche 1 bis 10 auszuführen.

13. Ein Computerprogrammcode, umfassend computerausführbare Programmcodeanweisungen, wobei die computerausführbaren Programmcodeanweisungen Programmcodeanweisungen umfassen, die dazu konfiguriert sind, wenn sie durch eine Vorrichtung (20) ausgeführt werden, die Vorrichtung zu veranlassen, das Verfahren nach einem der Ansprüche 1 bis 10 auszuführen.

14. Ein Computerprogrammcode gemäß Anspruch 13, wobei der Computerprogrammcode Teil eines Computerprogrammprodukts ist, wobei das Computerprogrammprodukt mindestens ein nicht-flüchtiges, computerlesbares Speichermedium umfasst, auf dem die computerausführbaren Programmcodeanweisungen gespeichert sind.

## Revendications

1. Une méthode de collecte de données de sonde, la méthode étant exécutée par un appareil (20), la méthode comprenant :
pendant la collecte des données de sonde, déterminer (42) un emplacement d'un dispositif utilisateur et une incertitude correspondante associée à l'emplacement déterminé ;
dans un cas où l'incertitude associée à l'emplacement déterminé ne satisfait pas un seuil prédéfini, amener (48) le dispositif utilisateur à fournir un premier guidage utilisateur vers une première région ayant moins d'incertitude que l'incertitude associée à l'emplacement déterminé ;
déterminer (46) la première région pour laquelle le premier guidage utilisateur est fourni basé sur un poids respectif assigné à chacune d'une pluralité de régions ayant moins d'incertitude que l'incertitude associée à l'emplacement déterminé ; et
dans un cas où l'incertitude associée à l'emplacement déterminé satisfait le seuil prédéfini, amener (52) le dispositif utilisateur à fournir un deuxième guidage utilisateur vers une deuxième région dans laquelle des données de sonde doivent être collectées.

2. Une méthode selon la revendication 1, où l'incertitude associée à un emplacement déterminé dans la deuxième région est supérieure à l'incertitude associée à un emplacement déterminé dans la première région.

3. Une méthode selon l'une des revendications 1 et 2, où la première et la deuxième région comprennent des régions extérieures et intérieures, respectivement.

4. Une méthode selon l'une des revendications 1 à 3, comprenant en outre déterminer (50) la deuxième région pour laquelle le deuxième guidage utilisateur est fourni basé sur la quantité des données de sonde qui ont été collectées dans la deuxième région.

5. Une méthode selon la revendication 4, où déterminer (50) la deuxième région comprend en outre déterminer la deuxième région pour laquelle le deuxième guidage utilisateur est fourni parmi une ou plusieurs régions ayant une incertitude supérieure à celle de la première région.

6. Une méthode selon l'une des revendications 1 à 5, comprenant en outre déterminer (50) la deuxième région pour laquelle le deuxième guidage utilisateur est fourni basé sur une durée pendant laquelle il est prévu de collecter des données de sonde avec une incertitude qui satisfait le seuil prédéfini.

7. Une méthode selon la revendication 1, où le poids respectif assigné à une région respective de la pluralité de régions ayant moins d'incertitude que l'incertitude associée à l'emplacement déterminé est basé sur une distance entre l'emplacement du dispositif utilisateur qui a le plus récemment eu une incertitude correspondante satisfaisant le seuil prédéfini et un emplacement de la région respective.

8. Une méthode selon l'une des revendications 1 à 7, où le poids respectif assigné à une région respective de la pluralité de régions ayant moins d'incertitude que l'incertitude associée à l'emplacement déterminé est basé sur une quantité de données de sonde qui ont été collectées à proximité de la région respective.

9. Une méthode selon l'une des revendications 1 à 8, comprenant en outre modifier le seuil prédéfini basé sur une valeur de mesure des données de sonde qui ont été collectées.

10. Une méthode selon l'une des revendications 1 à 9, comprenant en outre modifier le seuil prédéfini basé sur une taille d'un bâtiment dans lequel au moins une partie des données de sonde est collectée.

11. Un appareil (20) comprenant des moyens configurés pour exécuter la méthode selon l'une des revendications 1 à 10.

12. Un appareil (20) selon la revendication 11, l'appareil comprenant un circuit de traitement (22) et une ou plusieurs mémoires (24) stockant un code de programme informatique, l'une ou plusieurs mémoires (24) et le code de programme informatique étant configurés pour, avec le circuit de traitement (22), amener l'appareil (20) à exécuter la méthode selon l'une des revendications 1 à 10.

13. Un code de programme informatique comprenant des instructions de code de programme exécutables par ordinateur, les instructions de code de programme exécutables par ordinateur comprenant des instructions de code de programme configurées pour, lorsqu'elles sont exécutées par un appareil (20), amener l'appareil à exécuter la méthode selon l'une des revendications 1 à 10.

14. Un code de programme informatique selon la revendication 13, où le code de programme informatique fait partie d'un produit de programme informatique, le produit de programme informatique comprenant un ou plusieurs supports de stockage non transitoires lisibles par ordinateur ayant les instructions de code de programme exécutables par ordinateur stockées en leur sein.
